# EUROPEAN PATENT APPLICATION

(11) **EP 3 214 537 A1**
(43) Date of publication of application: **06.09.2017**
(21) Application number: 16840674.2
(22) Date of filing: 30.06.2016
(51) Int. Cl.: G06F 3/06

(54) **STORAGE ARRAY OPERATION METHOD AND DEVICE**

(30) Priority: 31.08.2015 CN 201510546964
(71) Applicant: Huawei Technologies Co., Ltd., Longgang District Shenzhen, Guangdong 518129 (CN)
(72) Inventor: TAN, Chunhua, Shenzhen Guangdong 518129 (CN)
(74) Representative: Gill Jennings & Every LLP
(86) International application number: PCT/CN2016/087919
(87) International publication number: WO 2017/036245

(57) **Abstract**

Embodiments of the present invention disclose a storage array operation method and apparatus. The method may include: receiving an operation instruction that is delivered by a target service object and that is directed at a cache of a storage array, where service objects supported by the storage array are divided into at least one performance group, and allowable operation traffic is calculated for each performance group in advance; selecting, from the at least one performance group, a target performance group to which the target service object belongs, and determining whether there is still remaining traffic in allowable operation traffic of the target performance group; and responding to the operation instruction if there is still remaining traffic in the allowable operation traffic of the target performance group; or rejecting the operation instruction if there is no remaining traffic in the allowable operation traffic of the target performance group. The embodiments of the present invention can resolve a performance degradation problem of converged storage.

## Description

### TECHNICAL FIELD

The present invention relates to the field of storage technologies, and in particular, to a storage array operation method and apparatus.

### BACKGROUND

With the development of storage technologies, a storage array usually supports multiple functions, for example, supports converged storage of network attached storage (network attached storage, NAS) and a storage area network (storage area networking, SAN), or supports both local access and heterogeneous logical unit number (Logical Unit Number, LUN) storage. Alternatively, there are usually multiple different services in a storage array. For example, a client may configure a thin provisioning (thin) LUN, a thick (thick) LUN, a snapshot service, and a LUN implemented based on a redirect-on-write (redirect on write, ROW) technology at the same time. In addition, an existing storage array usually provides a cache (Cache) function, to improve read and write efficiency. However, cache resources of the storage array may be shared by many service objects, and performance of different service objects varies greatly. For example, a slow service object occupies a large quantity of cache resources and cannot release the cache resources in a timely manner, leading to insufficiency of cache resources that can be used by a fast service object. As a result, performance of the fast service object rapidly degrades. For example, during NAS and SAN converged storage, when both the NAS and the SAN run a write service, and cache resources occupied by the NAS are used up, performance degradation of the SAN is caused, and service experience of a SAN service is affected. For example, for a hybrid storage array of a mechanical disk and a solid state drive (Solid State Drive, SSD), because performance of the mechanical disk is far lower than that of the SSD, when the mechanical disk occupies cache resources, no resources can be allocated to the SSD, and performance of the SSD degrades. It can be learned that a performance degradation problem of current converged storage is a technical problem that currently needs an urgent solution.

### SUMMARY

Embodiments of the present invention provide a storage array operation method and apparatus, so as to resolve a performance degradation problem of converged storage.

According to a first aspect, an embodiment of the present invention provides a storage array operation method, including:
receiving an operation instruction that is delivered by a target service object and that is directed at a cache of a storage array, where service objects supported by the storage array are divided into at least one performance group, and allowable operation traffic is calculated for each performance group in advance;
selecting, from the at least one performance group, a target performance group to which the target service object belongs, and determining whether there is still remaining traffic in allowable operation traffic of the target performance group; and
responding to the operation instruction if there is still remaining traffic in the allowable operation traffic of the target performance group; or rejecting the operation instruction if there is no remaining traffic in the allowable operation traffic of the target performance group.

In a first possible implementation manner of the first aspect, the storage array includes at least one disk domain, the at least one disk domain is divided into at least one performance pool, allowable operation traffic is calculated for each performance pool in advance, and each performance pool includes at least one performance group;
the responding to the operation instruction if there is still remaining traffic in the allowable operation traffic of the target performance group includes:
if there is still remaining traffic in the allowable operation traffic of the target performance group, selecting, from the at least one performance pool, a target performance pool to which the target performance group belongs, and determining whether there is still remaining traffic in allowable operation traffic of the target performance pool; and if yes, responding to the operation instruction; and
the method further includes:
   rejecting the operation instruction if there is no remaining traffic in the allowable operation traffic of the target performance pool.

With reference to the first aspect or the first possible implementation manner of the first aspect, in a second possible implementation manner of the first aspect, each performance group includes at least one performance subgroup, and allowable operation traffic is calculated for each performance subgroup in advance; and
the selecting, from the at least one performance group, a target performance group to which the target service object belongs, and determining whether there is still remaining traffic in allowable operation traffic of the target performance group includes:
selecting, from performance subgroups included in the at least one performance group, a target performance subgroup to which the target service object belongs, and determining whether there is still remaining traffic in allowable operation traffic of the target performance subgroup; and if yes, using a performance group to which the target performance subgroup belongs as the target performance group to which the target service object belongs, and determining whether there is still remaining traffic in the allowable operation traffic of the target performance group.

With reference to the first aspect, the first possible implementation manner of the first aspect, or the second possible implementation manner of the first aspect, in a third possible implementation manner of the first aspect, the method further includes:
obtaining the service objects supported by the storage array, and creating the at least one performance group, where each performance group includes at least one service object; and
calculating the allowable operation traffic of each performance group, where the allowable operation traffic includes at least one of a quantity of write operations, write operation bandwidth, a quantity of read operations, or read operation bandwidth.

With reference to the third possible implementation manner of the first aspect, in a fourth possible implementation manner of the first aspect, the method further includes:
setting a priority level of the at least one performance group; and
adjusting the allowable operation traffic of each performance group according to a priority level of the performance group, where the adjusted allowable operation traffic of each performance group corresponds to the priority level of the performance group.

With reference to the first possible implementation manner of the first aspect or the second possible implementation manner of the first aspect, in a fifth possible implementation manner of the first aspect, the method further includes:
creating the at least one performance pool according to the at least one disk domain included in the storage array, where each performance pool includes at least one disk domain;
calculating the allowable operation traffic of each performance pool, where the allowable operation traffic includes at least one of a quantity of write operations, write operation bandwidth, a quantity of read operations, or read operation bandwidth; and
associating a parent-child relationship between the at least one performance group and the at least one performance pool, where each performance pool includes at least one performance group.

With reference to the second possible implementation manner of the first aspect, in a sixth possible implementation manner of the first aspect, after the responding to the operation instruction, the method further includes:
querying current allowable operation traffic of the target performance group, and adjusting the current allowable operation traffic of the target performance group according to current traffic generated by the operation instruction;
querying current allowable operation traffic of the target performance pool, and adjusting the current allowable operation traffic of the target performance pool according to the current traffic generated by the operation instruction; and
querying current allowable operation traffic of the target performance subgroup, and adjusting the current allowable operation traffic of the target performance subgroup according to the current traffic generated by the operation instruction.

According to a second aspect, an embodiment of the present invention provides a storage array operation apparatus, including a receiving unit, a determining unit, a responding unit, and a first rejection unit, where
the receiving unit is configured to receive an operation instruction that is delivered by a target service object and that is directed at a cache of a storage array, where service objects supported by the storage array are divided into at least one performance group, and allowable operation traffic is calculated for each performance group in advance;
the determining unit is configured to select, from the at least one performance group, a target performance group to which the target service object belongs, and determine whether there is still remaining traffic in allowable operation traffic of the target performance group;
the responding unit is configured to respond to the operation instruction if there is still remaining traffic in the allowable operation traffic of the target performance group; and
the first rejection unit is configured to reject the operation instruction if there is no remaining traffic in the allowable operation traffic of the target performance group.

In a first possible implementation manner of the second aspect, the storage array includes at least one disk domain, the at least one disk domain is divided into at least one performance pool, allowable operation traffic is calculated for each performance pool in advance, and each performance pool includes at least one performance group;
the responding unit is configured to: if there is still remaining traffic in the allowable operation traffic of the target performance group, select, from the at least one performance pool, a target performance pool to which the target performance group belongs, and determine whether there is still remaining traffic in allowable operation traffic of the target performance pool; and if yes, respond to the operation instruction; and
the apparatus further includes:
a second rejection unit, configured to reject the operation instruction if there is no remaining traffic in the allowable operation traffic of the target performance pool.

With reference to the second aspect or the first possible implementation manner of the second aspect, in a second possible implementation manner of the second aspect, each performance group includes at least one performance subgroup, and allowable operation traffic is calculated for each performance subgroup in advance; and
the determining unit is configured to: select, from performance subgroups included in the at least one performance group, a target performance subgroup to which the target service object belongs, and determine whether there is still remaining traffic in allowable operation traffic of the target performance subgroup; and if yes, use a performance group to which the target performance subgroup belongs as the target performance group to which the target service object belongs, and determine whether there is still remaining traffic in the allowable operation traffic of the target performance group.

With reference to the second aspect, the first possible implementation manner of the second aspect, or the second possible implementation manner of the second aspect, in a third possible implementation manner of the second aspect, the apparatus further includes:
a first creating unit, configured to obtain the service objects supported by the storage array, and create the at least one performance group, where each performance group includes at least one service object; and
a first calculation unit, configured to calculate the allowable operation traffic of each performance group, where the allowable operation traffic includes at least one of a quantity of write operations, write operation bandwidth, a quantity of read operations, or read operation bandwidth.

With reference to the third possible implementation manner of the second aspect, in a fourth possible implementation manner of the second aspect, the apparatus further includes:
a setting unit, configured to set a priority level of the at least one performance group; and
a first adjustment unit, configured to adjust the allowable operation traffic of each performance group according to a priority level of the performance group, where the adjusted allowable operation traffic of each performance group corresponds to the priority level of the performance group.

With reference to the first possible implementation manner of the second aspect or the second possible implementation manner of the second aspect, in a fifth possible implementation manner of the second aspect, the apparatus further includes:
a second creating unit, configured to create the at least one performance pool according to the at least one disk domain included in the storage array, where each performance pool includes at least one disk domain;
a second calculation unit, configured to calculate the allowable operation traffic of each performance pool, where the allowable operation traffic includes at least one of a quantity of write operations, write operation bandwidth, a quantity of read operations, or read operation bandwidth; and
an association unit, configured to associate a parent-child relationship between the at least one performance group and the at least one performance pool, where each performance pool includes at least one performance group.

With reference to the second possible implementation manner of the second aspect, in a sixth possible implementation manner of the second aspect, the apparatus further includes:
a second adjustment unit, configured to query current allowable operation traffic of the target performance group, and adjust the current allowable operation traffic of the target performance group according to current traffic generated by the operation instruction;
a third adjustment unit, configured to query current allowable operation traffic of the target performance pool, and adjust the current allowable operation traffic of the target performance pool according to the current traffic generated by the operation instruction; and
a fourth adjustment unit, configured to query current allowable operation traffic of the target performance subgroup, and adjust the current allowable operation traffic of the target performance subgroup according to the current traffic generated by the operation instruction.

In the foregoing technical solutions, an operation instruction that is delivered by a target service object and that is directed at a cache of a storage array is received, where service objects supported by the storage array are divided into at least one performance group, and allowable operation traffic is calculated for each performance group in advance; a target performance group to which the target service object belongs is selected from the at least one performance group, and whether there is still remaining traffic in allowable operation traffic of the target performance group is determined; and the operation instruction is responded to if there is still remaining traffic in the allowable operation traffic of the target performance group; or the operation instruction is rejected if there is no remaining traffic in the allowable operation traffic of the target performance group. In this way, operation traffic of a service object can be limited, so that performance degradation of another service object caused by excessive occupation of the cache by a service object can be avoided. Therefore, the embodiments of the present invention can resolve a performance degradation problem of converged storage.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a storage array operation method according to an embodiment of the present invention;
FIG. 2 is a diagram of a system architecture to which a storage array operation method provided in an embodiment of the present invention is applicable;
FIG. 3 is a schematic flowchart of another storage array operation method according to an embodiment of the present invention;
FIG. 4 is a schematic diagram of an optional process of creating a performance group and a performance pool according to an embodiment of the present invention;
FIG. 5 is a schematic structural diagram of an optional storage array according to an embodiment of the present invention;
FIG. 6 is a schematic structural diagram of another optional storage array according to an embodiment of the present invention;
FIG. 7 is a schematic diagram of an optional process of creating a performance subgroup, a performance group, and a performance pool according to an embodiment of the present invention;
FIG. 8 is a schematic diagram of optional access timing and performance adjustment according to an embodiment of the present invention;
FIG. 9 is a schematic diagram of another optional access timing and performance adjustment according to an embodiment of the present invention;
FIG. 10 is a schematic structural diagram of a storage array operation apparatus according to an embodiment of the present invention;
FIG. 11 is a schematic structural diagram of another storage array operation apparatus according to an embodiment of the present invention;
FIG. 12 is a schematic structural diagram of another storage array operation apparatus according to an embodiment of the present invention;
FIG. 13 is a schematic structural diagram of another storage array operation apparatus according to an embodiment of the present invention;
FIG. 14 is a schematic structural diagram of another storage array operation apparatus according to an embodiment of the present invention;
FIG. 15 is a schematic structural diagram of another storage array operation apparatus according to an embodiment of the present invention; and
FIG. 16 is a schematic structural diagram of another storage array operation apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

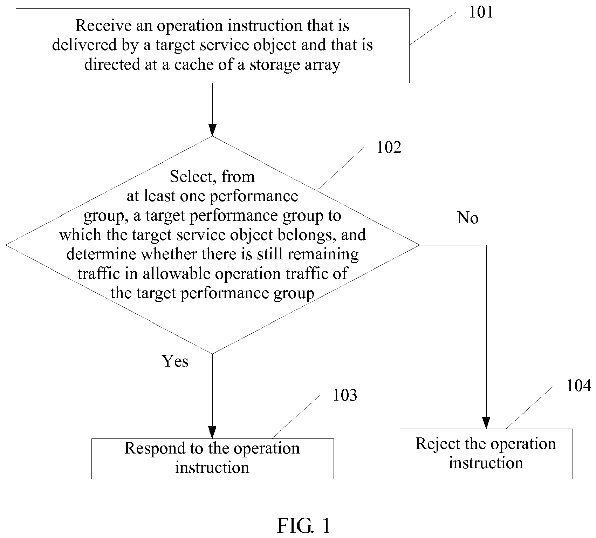

Referring to FIG. 1, FIG. 1 is a schematic flowchart of a storage array operation method according to an embodiment of the present invention. As shown in FIG. 1, the method includes the following steps.

101. Receive an operation instruction that is delivered by a target service object and that is directed at a cache of a storage array, where service objects supported by the storage array are divided into at least one performance group, and allowable operation traffic is calculated for each performance group in advance.

In this embodiment, the storage array is a converged storage array. The storage array may support multiple service objects, for example, support local access and LUN storage, or support a thin provisioning (thin) LUN, a thick (thick) LUN, a snapshot service, and a LUN implemented based on a ROW technology, or may support a service object such as a file system.

In addition, in this embodiment, each performance group may include different service objects. For example, a performance group 1 may include at least one thin (thin) LUN, a performance group 2 may include at least one thick (thick) LUN, a performance group 3 may include at least one file system, and the like.

In addition, in this embodiment, the allowable operation traffic may be understood as operation traffic allowed per unit of time, for example, write traffic allowed per second or read traffic allowed per second; or the allowable operation traffic may be understood as read traffic or write traffic that is allowed in a time period; or the like.

In addition, in this embodiment, the operation instruction may be a read operation instruction or a write operation instruction, for example, a write operation instruction that is delivered by a file system to perform a write operation on the cache, or a read operation instruction that is delivered by a LUN to perform a read operation on the cache.

102. Select, from the at least one performance group, a target performance group to which the target service object belongs, and determine whether there is still remaining traffic in allowable operation traffic of the target performance group.

In this embodiment, because the service objects supported by the storage array are divided into at least one performance group, the target service object certainly belongs to one of the at least one performance group. Therefore, the target performance group can be selected in step 102. In addition, in this embodiment, the allowable operation traffic is a variable. That is, the allowable operation traffic may change as the operation instruction is responded to. The remaining traffic may be understood as operation traffic that is currently still allowed for a performance group. For example, original allowable operation traffic of the target performance group is 1000, and after multiple operation instructions are responded to, the allowable operation traffic certainly decreases. If the target performance group has remaining allowable operation traffic of 800, 800 is the remaining traffic. In this embodiment, the operation traffic may be counted according to a storage unit, or counted according to a quantity of operations or a cache occupation time, and this embodiment sets no limitation thereto.

103. Respond to the operation instruction if there is still remaining traffic in the allowable operation traffic of the target performance group.

Responding to the operation instruction may be responding to the operation instruction by the cache.

104. Reject the operation instruction if there is no remaining traffic in the allowable operation traffic of the target performance group.

Rejecting the operation instruction may be rejecting the operation instruction by a controller of the storage array, that is, the operation instruction is not responded to.

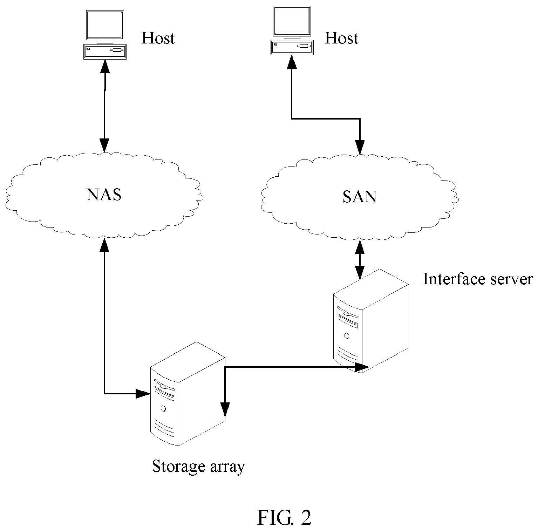

In this embodiment, the foregoing method may be applied to any storage device including a storage array, for example, a server and a computer. In addition, the storage device to which the foregoing method is applied may be a storage array in a distributed system. For example, if the storage array supports both a NAS service and a SAN service, a schematic diagram of the system may be shown in FIG. 2. The storage array supports both a NAS service and a SAN service, a host is connected to the storage array by using an interface server, and another host is directly connected to the storage array by using a network file system (Network File System, NFS) protocol or a common Internet file system (Common Internet File System, CIFS) protocol. Certainly, the storage device to which the foregoing method is applied may also be a storage device in a non-distributed system.

In this embodiment, an operation instruction that is delivered by a target service object and that is directed at a cache of a storage array is received, where service objects supported by the storage array are divided into at least one performance group, and allowable operation traffic is calculated for each performance group in advance; a target performance group to which the target service object belongs is selected from the at least one performance group, and whether there is still remaining traffic in allowable operation traffic of the target performance group is determined; and the operation instruction is responded to if there is still remaining traffic in the allowable operation traffic of the target performance group; or the operation instruction is rejected if there is no remaining traffic in the allowable operation traffic of the target performance group. In this way, operation traffic of a service object can be limited, so that performance degradation of another service object caused by excessive occupation of the cache by a service object can be avoided. Therefore, this embodiment of the present invention can resolve a performance degradation problem of converged storage.

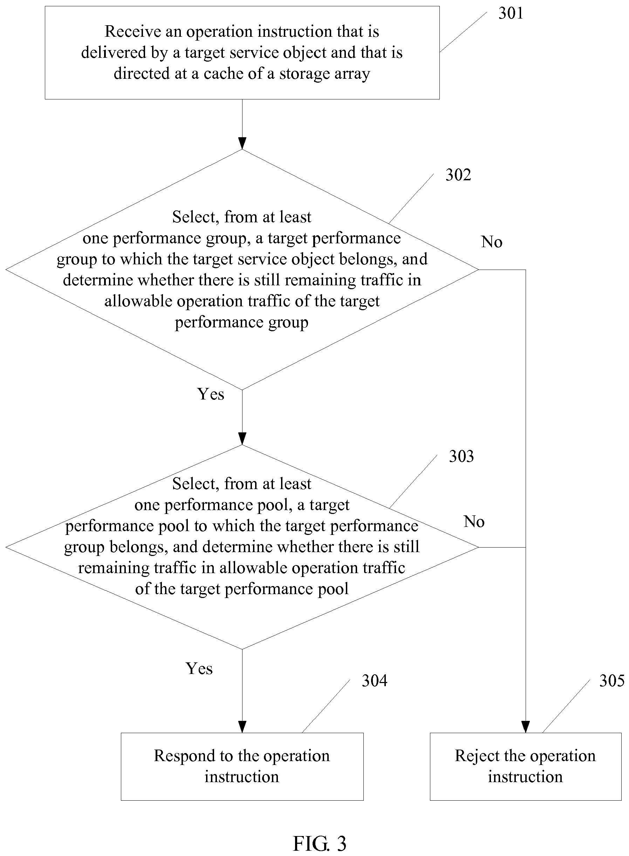

Referring to FIG. 3, FIG. 3 is a schematic flowchart of another storage array operation method according to an embodiment of the present invention. As shown in FIG. 3, the method includes the following steps.

301. Receive an operation instruction that is delivered by a target service object and that is directed at a cache of a storage array, where service objects supported by the storage array are divided into at least one performance group, and allowable operation traffic is calculated for each performance group in advance.

In this embodiment, the operation instruction delivered by the target service object may be delivered in an input/output (Input/Output, IO) manner. For example, step 301 may be: a controller of the storage array receives an IO delivered by a target service object of a host.

302. Select, from the at least one performance group, a target performance group to which the target service object belongs, and determine whether there is still remaining traffic in allowable operation traffic of the target performance group, where if there is still remaining traffic in the allowable operation traffic of the target performance group, step 303 is performed, or if there is no remaining traffic in the allowable operation traffic of the target performance group, step 305 is performed.

In this embodiment, the foregoing method may further include the following steps:
obtaining the service objects supported by the storage array, and creating the at least one performance group, where each performance group includes at least one service object; and
calculating the allowable operation traffic of each performance group, where the allowable operation traffic may include at least one of a quantity of write operations, write operation bandwidth, a quantity of read operations, or read operation bandwidth.

The quantity of write operations of the performance group may be a quantity of write operations per second, and may be specifically represented by using write IOPS (input/output operations per second, Input/Output Operations Per Second). The write IOPS equals a quotient of a disk write concurrency number and latency times a CPU loss percentage of service object performance characteristics, that is, Write IOPS = (Disk write concurrency number/Latency) * CPU loss percentage in the service object performance characteristics, where / represents a division operation; * represents a multiplication operation; the disk write concurrency number represents a maximum quantity of write operation instructions to which a hard disk is allowed to respond at the same time, or is understood as a maximum quantity of write IOs that the hard disk is allowed to deliver at the same time; the latency represents latency in responding to a write operation instruction, or is understood as latency in responding to a write IO, and a unit of the latency may be a second; and the CPU loss percentage in the service object performance characteristics is a ratio, and is data estimated according to a service characteristic.

In this way, a quantity of write operations to which each performance group is allowed to respond can be limited by using the quantity of write operations of the performance group.

The write operation bandwidth of the performance group may be understood as write bandwidth of the performance group. Write bandwidth of the performance group = Disk write concurrency number * IO size * CPU loss percentage in the service object performance characteristics/Latency, where the IO size may be understood as IO write traffic of any service object of the performance group, or the IO size may be understood as write traffic of a write operation instruction of a service object of the performance group.

In this way, bandwidth of write operations to which each performance group is allowed to respond can be limited by using the write operation bandwidth of the performance group.

The quantity of read operations of the performance group may be a quantity of read operations per second, and may be specifically represented by using read IOPS. The read IOPS equals a quotient of a disk read concurrency number and latency times a CPU loss percentage in the service object performance characteristics, that is, Read IOPS = (Disk read concurrency number/Latency) * CPU loss percentage in the service object performance characteristics, where the disk read concurrency number represents a maximum quantity of read operation instructions to which a hard disk is allowed to respond at the same time, or is understood as a maximum quantity of read IOs that the hard disk is allowed to deliver at the same time; the latency represents latency in responding to a read operation instruction, or is understood as latency in responding to a read IO, and a unit of the latency may be a second; and the CPU loss percentage in the service object performance characteristics is a ratio, and is data estimated according to a service characteristic.

In this way, a quantity of read operations to which each performance group is allowed to respond can be limited by using the quantity of read operations of the performance group.

The read operation bandwidth of the performance group may be understood as read bandwidth of the performance group. Read bandwidth of the performance group = Disk read concurrency number * IO size * CPU loss percentage in the service object performance characteristics/Latency, where the IO size may be understood as IO read traffic of any service object of the performance group, or the IO size may be understood as read traffic of a read operation instruction of a service object of the performance group.

In this way, bandwidth of read operations to which each performance group is allowed to respond can be limited by using the read operation bandwidth of the performance group.

In this implementation manner, when the operation instruction received in step 301 is a write operation instruction, the remaining traffic may include a quantity of write operations, or write operation bandwidth, or a quantity of write operations and write operation bandwidth. For example, when there is still a quantity of write operations and write operation bandwidth in the allowable operation traffic, there is still remaining traffic in the allowable operation traffic; or if the quantity of write operations in the allowable operation traffic is 0, or the write operation bandwidth is 0, there is no remaining traffic in the allowable operation traffic.

In addition, it should be noted that, in this embodiment, the allowable operation traffic may be updated each time one operation instruction is responded to. For example, each time a write operation instruction is responded to, 1 is subtracted from the quantity of write operations. Certainly, in this embodiment, the allowable operation traffic may also be periodically updated, so that a quantity of update operations may be reduced.

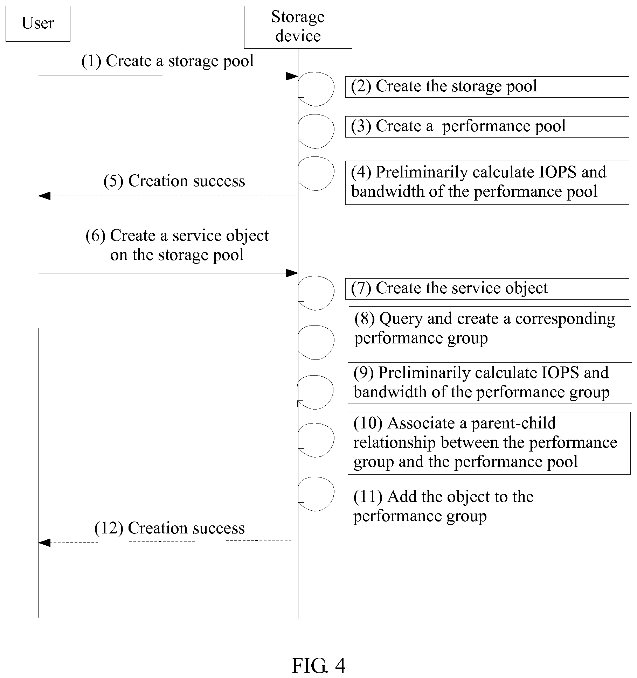

This implementation manner may be shown in FIG. 4, and may include the following steps:
(1) A user delivers a command for creating a storage pool;
(2) Create the storage pool on the storage array according to a disk domain;
(3) Create a corresponding performance pool in the corresponding storage pool, where
   the performance pool may include four parameters, which are respectively write IOPS, write bandwidth, read IOPS, and read bandwidth; and include a globally unique identifier associated with the storage pool;
(4) Preliminarily calculate two performance parameters of the performance pool: IOPS and bandwidth;
(5) Return a creation success to the user;
(6) The user delivers a command to create a service object, such as a LUN or a file system;
(7) Create the service object on the storage array;
(8) Query and create a corresponding performance group of a same type, where if the performance group is found already created, no performance group needs to be created;
(9) If the performance group is created for the first time, preliminarily calculate IOPS and bandwidth of the performance group;
(10) Associate a parent-child relationship between the performance group and the performance pool;
(11) Add the service object to the performance group; and
(12) Return a creation success to the user.

In this embodiment, a priority level may further be set for each performance group, and the allowable operation traffic of each performance group may be adjusted according to the priority level. For example, the foregoing method may further include the following steps:
setting a priority level of the at least one performance group; and
adjusting the allowable operation traffic of each performance group according to a priority level of the performance group, where the adjusted allowable operation traffic of each performance group corresponds to the priority level of the performance group.

The priority level of the at least one performance group may be set by receiving an operation instruction input by the user. In addition, in this embodiment, a correspondence between a priority level and an adjustment amount of allowable operation traffic may further be obtained in advance, that is, calculated allowable operation traffic may be adjusted according to a priority level of a performance group. For example, an adjustment amount corresponding to a first priority level is a 50% increase, an adjustment amount corresponding to a second priority level is a 10% increase, an adjustment amount corresponding to a third priority level is a 10% decrease, and the like. In this way, after allowable operation traffic of a performance group is calculated by using the foregoing formula, when it is identified that a priority level of the performance group is the first priority level, the allowable operation traffic of the performance group may be increased by 50%. Alternatively, a correspondence between a priority level and allowable operation traffic may be obtained in advance. For example, allowable operation traffic corresponding to a first priority level is 1000 write operations per second, and allowable operation traffic corresponding to a second priority level is 800 write operations per second is 800. In this way, allowable operation traffic of a performance group may be directly adjusted according to the correspondence.

In this implementation manner, a priority level can be set for a performance group. In this way, allowable operation traffic of the performance group can be adjusted more flexibly. In addition, after the priority level is set, it may further be set that the allowable operation traffic of the performance group is not dynamically adjusted.

303. Select, from at least one performance pool, a target performance pool to which the target performance group belongs, and determine whether there is still remaining traffic in allowable operation traffic of the target performance pool, where if if there is still remaining traffic in the allowable operation traffic of the target performance pool, step 304 is performed, or if there is no remaining traffic in the allowable operation traffic of the target performance pool, step 305 is performed.

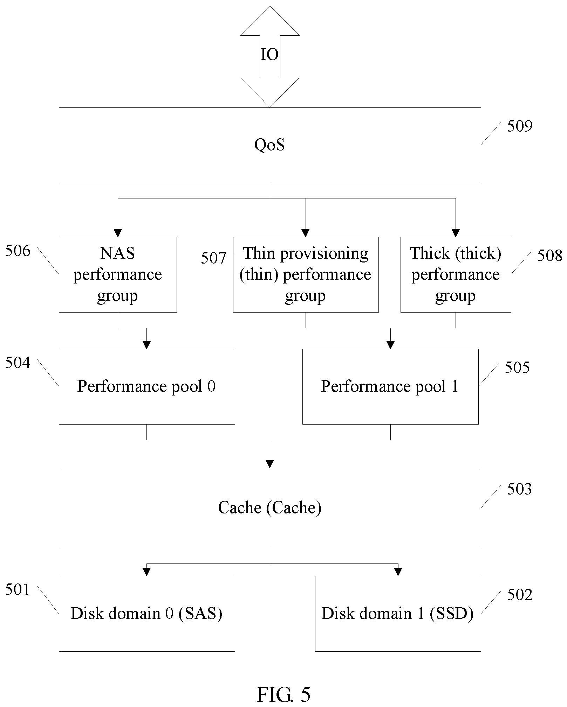

In this embodiment, the storage array includes at least one disk domain, the at least one disk domain is divided into at least one performance pool, allowable operation traffic is calculated for each performance pool in advance, and each performance pool includes at least one performance group. The disk domain may be understood as one or more hard disks, that is, one disk domain may include one or more hard disks. In addition, each performance pool may include one or more disk domains. For example, the storage array includes a SAS hard disk and an SSD, that is, as shown in FIG. 5, the storage array may include a SAS disk domain 501 and an SSD domain 502. In addition, the storage array further includes a cache 503. In this way, in this embodiment, a performance pool 504 and a performance pool 505 that respectively include the SAS disk domain 501 and the SSD domain 502 may be created. "Include" herein may be understood as "logically include". A NAS performance group 506 may be created on the performance pool 504, and the NAS performance group 506 may include a file system; and a thin (thin) performance group 507 and a thick (thick) performance group 508 may be created on the performance pool 505. In addition, in this embodiment, a quality-of-service (Quality of Service, QoS) module 509 may be deployed on the controller of the storage array, where the QoS module 509 may be configured to adjust allowable operation traffic of each performance group and each performance pool.

It should be noted that, in FIG. 5, the SAS disk domain 501, the SSD domain 502, and the cache 503 all are hardware modules, and the performance pool 504, the performance pool 505, the NAS performance group 506, the thin (thin) performance group 507, the thick (thick) performance group 508, and the QOS module 509 all may be program modules created on the storage array or may be understood as logical modules or may be understood as virtual modules.

In this embodiment, the foregoing method may further include the following steps:
creating the at least one performance pool according to the at least one disk domain included in the storage array, where each performance pool includes at least one disk domain;
calculating the allowable operation traffic of each performance pool, where the allowable operation traffic includes at least one of a quantity of write operations, write operation bandwidth, a quantity of read operations, or read operation bandwidth; and
associating a parent-child relationship between the at least one performance group and the at least one performance pool, where each performance pool includes at least one performance group.

The quantity of write operations of the performance pool may be a quantity of write operations per second, and may be represented by using write IOPS. Write IOPS of the performance pool = Quantity of hard disks * Single-disk write IOPS * CPU loss percentage in system performance characteristics, where the quantity of hard disks is a quantity of hard disks included in the performance pool; the single-disk write IOPS is a quantity of write operations allowed per second of a hard disk in the performance pool; and the CPU loss percentage in the system performance characteristics is a ratio, and is data estimated according to a hard disk characteristic.

In this way, a quantity of write operations to which each performance pool is allowed to respond can be limited by using the quantity of write operations of the performance pool.

The write operation bandwidth of the performance pool may be understood as write bandwidth of the performance pool. Write bandwidth of the performance pool = Quantity of hard disks * Single-disk write bandwidth * CPU loss percentage in the system performance characteristics, where the single-disk write bandwidth is write bandwidth of a write operation instruction of a hard disk included in the performance pool.

In this way, bandwidth of write operations to which each performance pool is allowed to respond can be limited by using the write operation bandwidth of the performance pool.

The quantity of read operations of the performance pool may be a quantity of read operations per second, and may be specifically represented by using read IOPS. Read IOPS = Quantity of hard disks * Single-disk read IOPS * CPU loss percentage in the system performance characteristics, where the single-disk read IOPS is a quantity of read operations allowed per second of a hard disk in the performance pool.

In this way, a quantity of read operations to which each performance pool is allowed to read can be limited by using the quantity of read operations of the performance pool.

The read operation bandwidth of the performance pool may be understood as read bandwidth of the performance pool. Read bandwidth of the performance pool = Quantity of hard disks * Single-disk read bandwidth * CPU loss percentage in the system performance characteristics, where the single-disk read bandwidth is read bandwidth of a read operation instruction of a hard disk included in the performance pool.

In this way, bandwidth of read operations to which each performance pool is allowed to respond can be limited by using the read operation bandwidth of the performance pool.

304. Respond to the operation instruction.

In this embodiment, the operation instruction may be responded to only when there is still remaining traffic in the allowable operation traffic of the target performance group and there is still remaining traffic in the allowable operation traffic of the target performance pool. In this way, the target performance group can be prevented from excessively occupying the cache, so that performance of another performance group is not affected; and the target performance pool can further be prevented from excessively occupying the cache, so that performance of another performance pool is not affected, thereby implementing QoS.

305. Reject the operation instruction.

In this embodiment, the operation instruction may be rejected when there is no remaining traffic in the allowable operation traffic of the target performance group, and the operation instruction is rejected when there is remaining traffic in the allowable operation traffic of the target performance group but there is no remaining traffic in the allowable operation traffic of the target performance pool. In this way, the target performance group can be prevented from excessively occupying the cache, so that performance of another performance group is not affected; and the target performance pool can further be prevented from excessively occupying the cache, so that performance of another performance pool is not affected, thereby implementing QoS.

In addition, in this embodiment, rejecting the operation instruction may be returning a busy prompt to the service object that sends the operation instruction, or returning a busy prompt to the host.

In this embodiment, each performance group may include at least one performance subgroup. For example, a performance subgroup is created for each service object. In addition, allowable operation traffic may further be calculated for each performance subgroup in advance. For example, the foregoing method may further include the following steps:
obtaining the service objects supported by the storage array, and creating a performance subgroup for each service object; and
calculating allowable operation traffic of each performance subgroup, where the allowable operation traffic includes at least one of a quantity of write operations, write operation bandwidth, a quantity of read operations, or read operation bandwidth.

The quantity of write operations of the performance subgroup may be a quantity of write operations per second, and may be specifically represented by using write IOPS. The write IOPS equals a quotient of a disk write concurrency number and latency times a CPU loss percentage in the service object performance characteristics, that is, Write IOPS = (Disk write concurrency number/Latency) * CPU loss percentage in the service object performance characteristics, where the disk write concurrency number represents a maximum quantity of write operation instructions to which a hard disk is allowed to respond at the same time, or is understood as a maximum quantity of write IOs that a hard disk is allowed to deliver at the same time; the latency represents latency in responding to a write operation instruction of a service object included in the performance subgroup, or is understood as latency in responding to a write IO of a service object included in the performance subgroup, and a unit of the latency may be a second; and the CPU loss percentage in the service object performance characteristics is a ratio, and is data estimated according to a characteristic of the service object included in the performance subgroup.

In this way, a quantity of write operations to which each service object is allowed to respond can be limited by using the quantity of write operations of the performance subgroup.

The write operation bandwidth of the performance subgroup may be understood as write bandwidth of the performance subgroup. Write bandwidth of the performance subgroup = Disk write concurrency number * IO size * CPU loss percentage in the service object performance characteristics/Latency.

In this way, bandwidth of write operations to which each service object is allowed to respond can be limited by using the write operation bandwidth of the performance subgroup.

The quantity of read operations of the performance subgroup may be a quantity of read operations per second, and may be specifically represented by using read IOPS. The read IOPS equals a quotient of a disk read concurrency number and latency times a CPU loss percentage in the service object performance characteristics, that is, Read IOPS = (Disk read concurrency number/Latency) * CPU loss percentage in the service object performance characteristics.

In this way, a quantity of read operations to which each service object is allowed to respond can be limited by using the quantity of read operations of the performance subgroup.

The read operation bandwidth of the performance subgroup may be understood as read bandwidth of the performance subgroup. Read bandwidth of the performance subgroup = Disk read concurrency number * IO size * CPU loss percentage in the service object performance characteristics/Latency, where the IO size may be understood as IO read traffic of a service object of the performance subgroup, or the IO size may be understood as read traffic of a read operation instruction of a service object of the performance subgroup.

In this way, bandwidth of read operations to which each performance group is allowed to respond can be limited by using the read operation bandwidth of the performance group.

In this way, bandwidth of read operations to which each service object is allowed to respond can be limited by using the read operation bandwidth of the performance subgroup.

In this implementation manner, the selecting, from the at least one performance group, a target performance group to which the target service object belongs, and determining whether there is still remaining traffic in allowable operation traffic of the target performance group may include:
selecting, from performance subgroups included in the at least one performance group, a target performance subgroup to which the target service object belongs, and determining whether there is still remaining traffic in allowable operation traffic of the target performance subgroup; and if yes, using a performance group to which the target performance subgroup belongs as the target performance group to which the target service object belongs, and determining whether there is still remaining traffic in the allowable operation traffic of the target performance group.

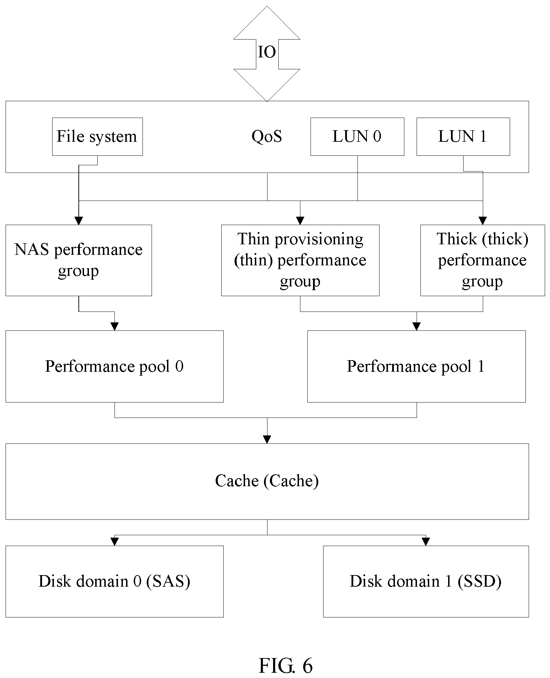

In this implementation manner, the operation instruction may be responded to only when there is remaining traffic in the allowable operation traffic of the target performance subgroup, there is remaining traffic in the allowable operation traffic of the target performance group, and there is remaining traffic in the allowable operation traffic of the target performance pool. In this way, operation traffic of each service object can be managed more precisely, so as to avoid affecting performance of another service object and implement performance service assurance between different service objects. Specifically, as shown in FIG. 6, based on a universal object performance assurance algorithm, a corresponding Qos policy is configured for a service object such as a file system or a LUN. A performance group and a performance pool may be shown in FIG. 5. In this way, allowable operation traffic of the service object may be first controlled, then allowable operation traffic of a performance group to which the service object belongs is controlled, and then allowable operation traffic of a performance pool to which the performance group belongs is controlled. Finally, performance of different disk domains does not affect each other, service objects in different performance groups do not affect each other, and Qos performance of a single service object in a performance group is ensured. Therefore, a performance degradation problem caused in the storage array when multiple objects coexist is resolved.

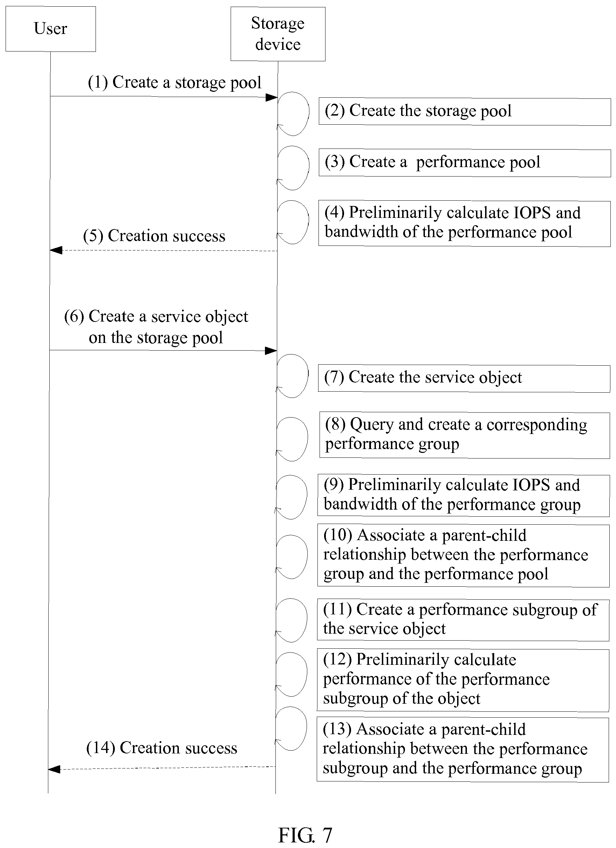

This implementation manner may be shown in FIG. 7, and include the following steps:
(1) A user delivers a command for creating a storage pool;
(2) Create the storage pool on the storage array according to a disk domain;
(3) Create a corresponding performance pool in the corresponding storage pool;
(4) Preliminarily calculate two performance parameters of the performance pool: IOPS and bandwidth;
(5) Return a creation success to the user;
(6) The user delivers a command to create a service object, such as a LUN or a file system;
(7) Create the service object on the storage array;
(8) Query and create a corresponding performance group of a same type, where if the performance group is found already created, no performance group needs to be created;
(9) If the performance group is created for the first time, preliminarily calculate IOPS and bandwidth of the performance group;
(10) Associate a parent-child relationship between the performance group and the performance pool;
(11) Create a performance subgroup of the service object;
(12) Preliminarily calculate a performance value of the performance subgroup;
(13) Associate a parent-child relationship between the performance subgroup and the performance group; and
(14) Return a creation success to the user.

In this implementation manner, after the operation instruction is responded to, the foregoing method may further include the following steps:
querying current allowable operation traffic of the target performance group, and adjusting the current allowable operation traffic of the target performance group according to current traffic generated by the operation instruction;
querying current allowable operation traffic of the target performance pool, and adjusting the current allowable operation traffic of the target performance pool according to the current traffic generated by the operation instruction; and
querying current allowable operation traffic of the target performance subgroup, and adjusting the current allowable operation traffic of the target performance subgroup according to the current traffic generated by the operation instruction.

In this way, the allowable operation traffic of the performance pool, the performance group, and the performance subgroup may be updated. In addition, the current traffic may include a quantity of operations and operation bandwidth. In addition, in this embodiment, the allowable operation traffic of the performance pool, the performance group, and the performance subgroup may be periodically adjusted.

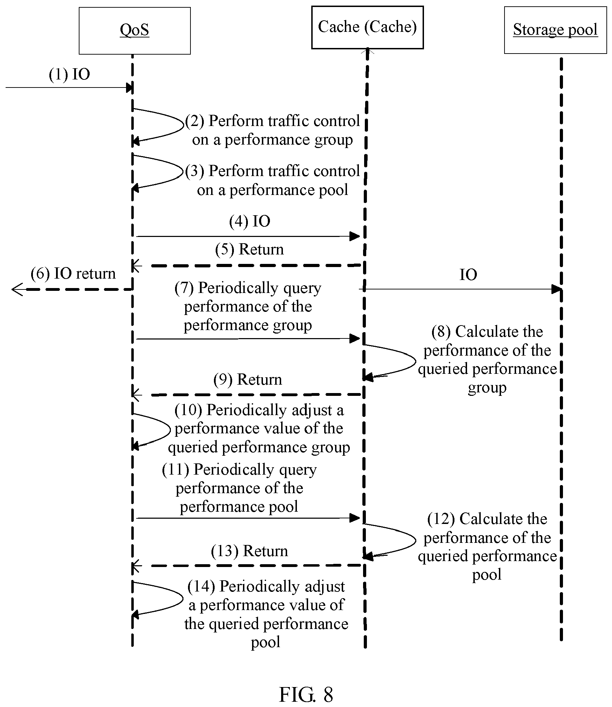

In this implementation manner, the allowable operation traffic of the performance pool, the performance group, and the performance subgroup may be adjusted by the QoS module deployed in the controller of the storage array. For example, as shown in FIG. 8, this implementation manner includes the following steps:
(1) An IO enters the storage array and passes through the controller, where the IO may be understood as the operation instruction received in step 301.
(2) The controller performs traffic control on a performance group for the IO. When a performance group to which the IO belongs still has remaining traffic, a next step is performed; when a performance group to which the IO belongs has no remaining traffic, a service of the IO is rejected, and the controller returns a busy prompt to the host.
(3) The controller performs traffic control on a performance pool for the IO. When a performance pool to which the IO belongs still has remaining traffic, a next step is performed. When a performance pool to which the IO belongs still has remaining traffic, a next step is performed, the service of the IO is rejected, and the controller returns a busy prompt to the host.
(4) The controller delivers the IO to a cache for caching.
(5) Return, where the return may be understood as a response result returned in response to the IO.
(6) IO return, where the IO return may be understood as returning, to the host, the response result returned in response to the IO.
(7) The IO and a background timer trigger the Qos module to query performance of the performance group from the cache.
(8) The cache calculates the performance of the performance group, where the performance may be understood as current allowable operation traffic of the performance group.
(9) Return a result to the Qos, where a calculated performance value is returned to the Qos.
(10) The Qos performs periodical adjustment processing according to a current performance value and a performance value returned by the cache, where the performance value may be understood as current traffic generated by the IO. For example, the Qos module subtracts the current performance value from the performance value returned by the cache.
(11) The Qos module queries performance of the performance pool from the cache.
(12) The cache calculates the performance of the performance pool.
(13) Return a result to the Qos.
(14) The Qos performs periodical adjustment processing according to a current performance value and a calculated performance value returned by the cache.

In this way, performance of the performance group and the performance pool can be adjusted, that is, allowable operation traffic of the performance group and the performance pool can be adjusted.

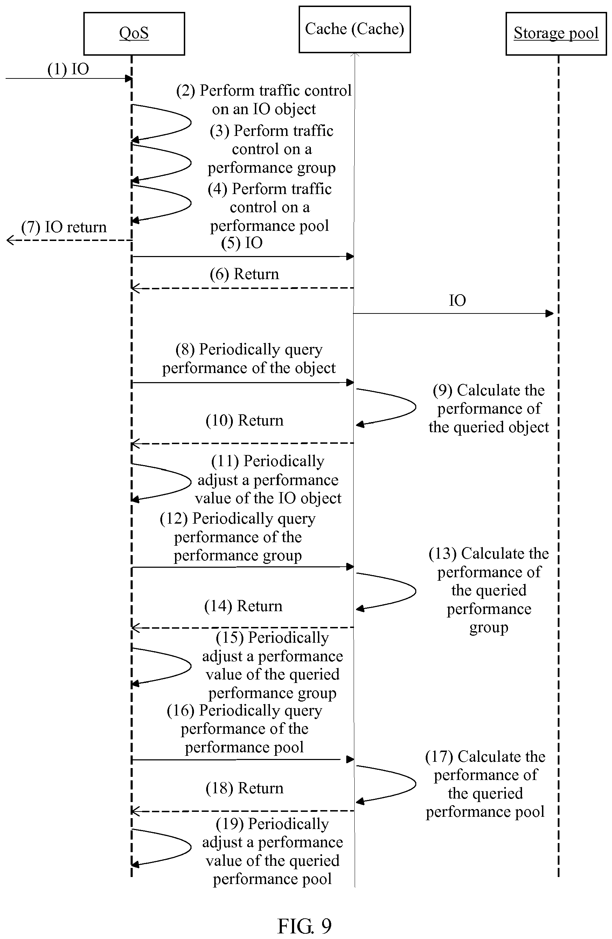

In addition, adjustment to the current allowable operation traffic of the performance subgroup may be shown in FIG. 9, and include the following steps:
(1) An IO enters the storage array and passes through the controller.
(2) The controller performs traffic control on a performance subgroup of an IO object for the IO. When a performance subgroup to which the IO belongs still has remaining traffic, a next step is performed. When a performance subgroup to which the IO belongs has no remaining traffic, a service of the IO is rejected, and the controller returns a busy prompt to the host.
(3) The controller performs traffic control on a performance group for the IO. When a performance group to which the IO belongs still has remaining traffic, a next step is performed; otherwise, the service of the IO is rejected, and the controller returns a busy prompt to the host.
(4) The controller performs traffic control on a performance pool for the IO. When a performance pool to which the IO belongs still has remaining traffic, a next step is performed; otherwise, the service of the IO is rejected, and the controller returns a busy prompt to the host.
(5) The controller delivers the IO to a cache for caching.
(6) Return, where the return may be understood as a response result returned in response to the IO.
(7) IO return, where the IO return may be understood as returning, to the host, the response result returned in response to the IO.
(8) The IO and a background timer trigger the Qos module to query performance of the performance subgroup from the cache.
(9) The cache calculates the performance of the performance subgroup.
(10) Return a result to the Qos, that is, return the calculated performance of the performance subgroup to the Qos.
(11) The Qos performs periodical adjustment processing according to a current performance value and a performance value returned by the cache.
(12) The Qos module queries performance of the performance group from the cache.
(13) The cache calculates the performance of the performance group.
(14) Return a result to the Qos, that is, return the calculated performance of the performance group to the Qos.
(15) The Qos performs periodical adjustment processing according to a current performance value and a performance value returned by the cache.
(16) The Qos module queries performance of the performance pool from the cache.
(17)The cache calculates the performance of the performance pool.
(18) Return a result to the Qos, that is, return the calculated performance of the performance pool to the Qos.
(19) The Qos performs periodical adjustment processing according to a current performance value and a performance value returned by the cache.

In this way, performance of the performance subgroup, the performance group, and the performance pool can be adjusted, that is, allowable operation traffic of the performance subgroup, the performance group, and the performance pool can be adjusted.

In this embodiment, multiple optional implementation manners are added based on the embodiment shown in FIG. 1, and all the optional implementation manners can resolve a performance degradation problem of converged storage.

The following are apparatus embodiments of the present invention, and the apparatus embodiments of the present invention are used to execute the methods implemented in the first and the second method embodiments of the present invention. For ease of description, only parts related to the embodiments of the present invention are shown. For undisclosed specific technical details, reference may be made to the first embodiment and the second embodiment of the present invention.

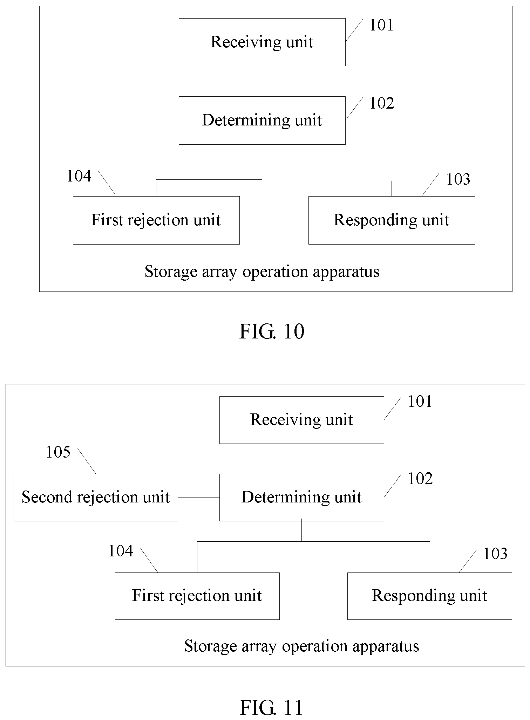

Referring to FIG. 10, FIG. 10 is a schematic structural diagram of a storage array operation apparatus according to an embodiment of the present invention. As shown in FIG. 10, the apparatus includes a receiving unit 101, a determining unit 102, a responding unit 103, and a first rejection unit 104.

The receiving unit 101 is configured to receive an operation instruction that is delivered by a target service object and that is directed at a cache of the storage array, where service objects supported by the storage array are divided into at least one performance group, and allowable operation traffic is calculated for each performance group in advance.

The determining unit 102 is configured to select, from the at least one performance group, a target performance group to which the target service object belongs, and determine whether there is still remaining traffic in allowable operation traffic of the target performance group.

The responding unit 103 is configured to respond to the operation instruction if there is still remaining traffic in the allowable operation traffic of the target performance group.

The first rejection unit 104 is configured to reject the operation instruction if there is no remaining traffic in the allowable operation traffic of the target performance group.

In this embodiment, the storage array may include at least one disk domain, the at least one disk domain is divided into at least one performance pool, allowable operation traffic is calculated for each performance pool in advance, and each performance pool includes at least one performance group; and
the responding unit 103 may be configured to: if there is still remaining traffic in the allowable operation traffic of the target performance group, select, from the at least one performance pool, a target performance pool to which the target performance group belongs, and determine whether there is still remaining traffic in allowable operation traffic of the target performance pool; and if yes, respond to the operation instruction.

As shown in FIG. 11, the apparatus may further include:
a second rejection unit 105, configured to reject the operation instruction if there is no remaining traffic in the allowable operation traffic of the target performance pool.

In this embodiment, each performance group may include at least one performance subgroup, and allowable operation traffic is calculated for each performance subgroup in advance; and
the determining unit 102 may be configured to select, from performance subgroups included in the at least one performance group, a target performance subgroup to which the target service object belongs, and determine whether there is still remaining traffic in allowable operation traffic of the target performance subgroup; and if yes, use a performance group to which the target performance subgroup belongs as the target performance group to which the target service object belongs, and determine whether there is still remaining traffic in the allowable operation traffic of the target performance group.

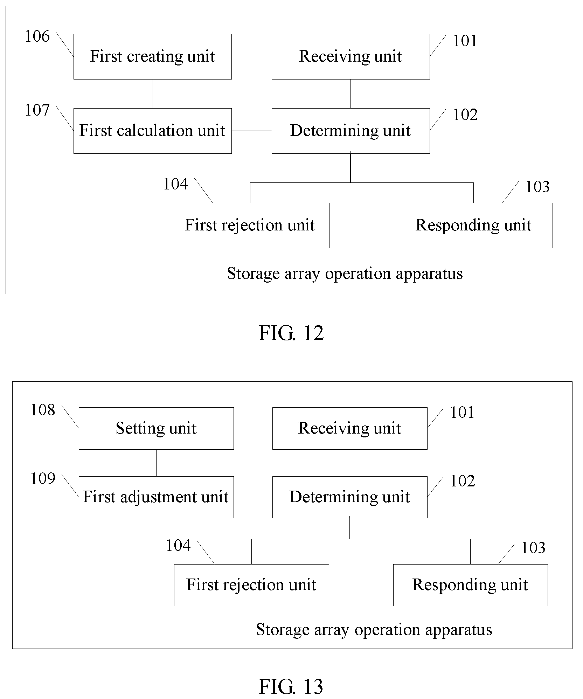

In this embodiment, as shown in FIG. 12, the apparatus may further include:
a first creating unit 106, configured to obtain the service objects supported by the storage array, and create the at least one performance group, where each performance group includes at least one service object; and
a first calculation unit 107, configured to calculate the allowable operation traffic of each performance group, where the allowable operation traffic includes at least one of a quantity of write operations, write operation bandwidth, a quantity of read operations, or read operation bandwidth.

In this embodiment, as shown in FIG. 13, the apparatus may further include:
a setting unit 108, configured to set a priority level of the at least one performance group; and
a first adjustment unit 109, configured to adjust the allowable operation traffic of each performance group according to a priority level of the performance group, where the adjusted allowable operation traffic of each performance group corresponds to the priority level of the performance group.

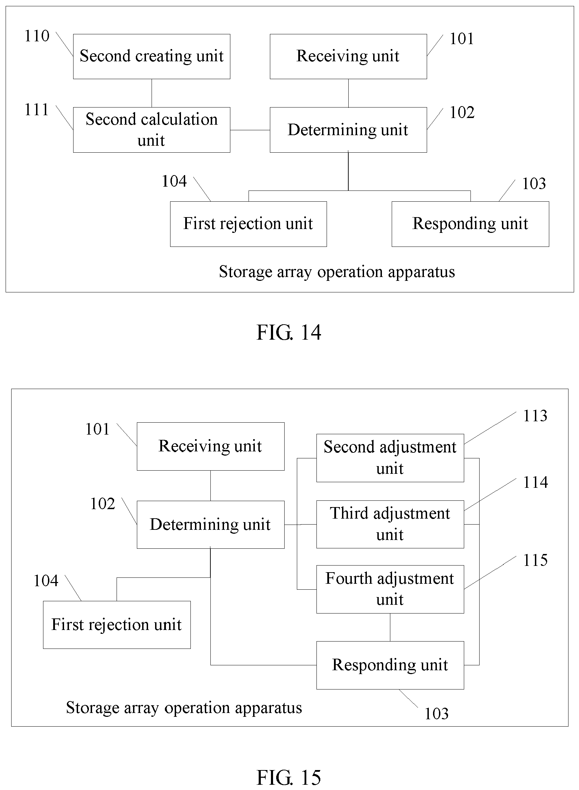

In this embodiment, as shown in FIG. 14, the apparatus may further include:
a second creating unit 110, configured to create the at least one performance pool according to the at least one disk domain included in the storage array, where each performance pool includes at least one disk domain;
a second calculation unit 111, configured to calculate the allowable operation traffic of each performance pool, where the allowable operation traffic includes at least one of a quantity of write operations, write operation bandwidth, a quantity of read operations, or read operation bandwidth; and
an association unit 112, configured to associate a parent-child relationship between the at least one performance group and the at least one performance pool, where each performance pool includes at least one performance group.

In this embodiment, as shown in FIG. 15, the apparatus may further include:
a second adjustment unit 113, configured to query current allowable operation traffic of the target performance group, and adjust the current allowable operation traffic of the target performance group according to current traffic generated by the operation instruction;
a third adjustment unit 114, configured to query current allowable operation traffic of the target performance pool, and adjust the current allowable operation traffic of the target performance pool according to the current traffic generated by the operation instruction; and
a fourth adjustment unit 115, configured to query current allowable operation traffic of the target performance subgroup, and adjust the current allowable operation traffic of the target performance subgroup according to the current traffic generated by the operation instruction.

It should be noted that the apparatus described in this embodiment may be configured to implement the methods described in the embodiments shown in FIG. 1 to FIG. 9. The apparatus described in this embodiment may implement any implementation manner in the embodiments shown in FIG. 1 to FIG. 9, and details are not described herein.

In this embodiment, an operation instruction that is delivered by a target service object and that is directed at a cache of a storage array is received, where service objects supported by the storage array are divided into at least one performance group, and allowable operation traffic is calculated for each performance group in advance; a target performance group to which the target service object belongs is selected from the at least one performance group, and whether there is still remaining traffic in allowable operation traffic of the target performance group is determined; and the operation instruction is responded to if there is still remaining traffic in the allowable operation traffic of the target performance group; or the operation instruction is rejected if there is no remaining traffic in the allowable operation traffic of the target performance group. In this way, operation traffic of a service object can be limited, so that performance degradation of another service object caused by excessive occupation of the cache by a service object can be avoided. Therefore, this embodiment of the present invention can resolve a performance degradation problem of converged storage.

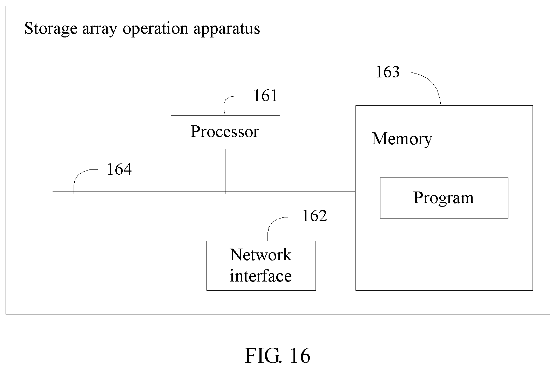

Referring to FIG. 16, FIG. 16 is a schematic structural diagram of another storage array operation apparatus according to an embodiment of the present invention. As shown in FIG. 16, the apparatus includes: a processor 161, a network interface 162, a memory 163, and a communications bus 164, where the communications bus 164 is configured to implement connection and communication among the processor 161, the network interface 162, and the memory 163. The processor 161 executes a program stored in the memory 163 to implement the following method:
receiving an operation instruction that is delivered by a target service object and that is directed at a cache of a storage array, where service objects supported by the storage array are divided into at least one performance group, and allowable operation traffic is calculated for each performance group in advance;
selecting, from the at least one performance group, a target performance group to which the target service object belongs, and determining whether there is still remaining traffic in allowable operation traffic of the target performance group; and
responding to the operation instruction if there is still remaining traffic in the allowable operation traffic of the target performance group; or rejecting the operation instruction if there is no remaining traffic in the allowable operation traffic of the target performance group.

In this embodiment, the storage array includes at least one disk domain, the at least one disk domain is divided into at least one performance pool, allowable operation traffic is calculated for each performance pool in advance, and each performance pool includes at least one performance group;
the program, executed by the processor 161, of responding to the operation instruction if there is still remaining traffic in the allowable operation traffic of the target performance group may include:
if there is still remaining traffic in the allowable operation traffic of the target performance group, selecting, from the at least one performance pool, a target performance pool to which the target performance group belongs, and determining whether there is still remaining traffic in allowable operation traffic of the target performance pool; and if yes, responding to the operation instruction; and
the program executed by the processor 161 may further include:
   rejecting the operation instruction if there is no remaining traffic in the allowable operation traffic of the target performance pool.

In this embodiment, each performance group includes at least one performance subgroup, and allowable operation traffic is calculated for each performance subgroup in advance; and
the program, executed by the processor 161, of selecting, from the at least one performance group, a target performance group to which the target service object belongs, and determining whether there is still remaining traffic in allowable operation traffic of the target performance group may include:
selecting, from performance subgroups included in the at least one performance group, a target performance subgroup to which the target service object belongs, and determining whether there is still remaining traffic in allowable operation traffic of the target performance subgroup; and if yes, using a performance group to which the target performance subgroup belongs as the target performance group to which the target service object belongs, and determining whether there is still remaining traffic in the allowable operation traffic of the target performance group.

In this embodiment, the program executed by the processor 161 may further include:
obtaining the service objects supported by the storage array, and creating the at least one performance group, where each performance group includes at least one service object; and
calculating the allowable operation traffic of each performance group, where the allowable operation traffic includes at least one of a quantity of write operations, write operation bandwidth, a quantity of read operations, or read operation bandwidth.

In this embodiment, the program executed by the processor 161 may further include:
setting a priority level of the at least one performance group; and
adjusting the allowable operation traffic of each performance group according to a priority level of the performance group, where the adjusted allowable operation traffic of each performance group corresponds to the priority level of the performance group.

In this embodiment, the program executed by the processor 161 may further include:
creating the at least one performance pool according to the at least one disk domain included in the storage array, where each performance pool includes at least one disk domain;
calculating the allowable operation traffic of each performance pool, where the allowable operation traffic includes at least one of a quantity of write operations, write operation bandwidth, a quantity of read operations, or read operation bandwidth; and
associating a parent-child relationship between the at least one performance group and the at least one performance pool, where each performance pool includes at least one performance group.

In this embodiment, after the responding to the operation instruction, the program executed by the processor 161 may further include:
querying current allowable operation traffic of the target performance group, and adjusting the current allowable operation traffic of the target performance group according to current traffic generated by the operation instruction;
querying current allowable operation traffic of the target performance pool, and adjusting the current allowable operation traffic of the target performance pool according to the current traffic generated by the operation instruction; and
querying current allowable operation traffic of the target performance subgroup, and adjusting the current allowable operation traffic of the target performance subgroup according to the current traffic generated by the operation instruction.

In this embodiment, an operation instruction that is delivered by a target service object and that is directed at a cache of a storage array is received, where service objects supported by the storage array are divided into at least one performance group, and allowable operation traffic is calculated for each performance group in advance; a target performance group to which the target service object belongs is selected from the at least one performance group, and whether there is still remaining traffic in allowable operation traffic of the target performance group is determined; and the operation instruction is responded to if there is still remaining traffic in the allowable operation traffic of the target performance group; or the operation instruction is rejected if there is no remaining traffic in the allowable operation traffic of the target performance group. In this way, operation traffic of a service object can be limited, so that performance degradation of another service object caused by excessive occupation of the cache by a service object can be avoided. Therefore, this embodiment of the present invention can resolve a performance degradation problem of converged storage.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disc, an optical disc, a read-only memory (Read-Only Memory, ROM), a random access memory (Random Access Memory, RAM for short), or the like.

What are disclosed above are merely examples of embodiments of the present invention, and certainly are not intended to limit the protection scope of the present invention. Therefore, equivalent variations made in accordance with the claims of the present invention shall fall within the scope of the present invention.

## Claims

1. A storage array operation method, comprising:
receiving an operation instruction that is delivered by a target service object and that is directed at a cache of a storage array, wherein service objects supported by the storage array are divided into at least one performance group, and allowable operation traffic is calculated for each performance group in advance;
selecting, from the at least one performance group, a target performance group to which the target service object belongs, and determining whether there is still remaining traffic in allowable operation traffic of the target performance group; and
responding to the operation instruction if there is still remaining traffic in the allowable operation traffic of the target performance group; or rejecting the operation instruction if there is no remaining traffic in the allowable operation traffic of the target performance group.

2. The method according to claim 1, wherein the storage array comprises at least one disk domain, the at least one disk domain is divided into at least one performance pool, allowable operation traffic is calculated for each performance pool in advance, and each performance pool comprises at least one performance group;
the responding to the operation instruction if there is still remaining traffic in the allowable operation traffic of the target performance group comprises:
if there is still remaining traffic in the allowable operation traffic of the target performance group, selecting, from the at least one performance pool, a target performance pool to which the target performance group belongs, and determining whether there is still remaining traffic in allowable operation traffic of the target performance pool; and if there is still remaining traffic in the allowable operation traffic of the target performance pool, responding to the operation instruction; and
the method further comprises:
rejecting the operation instruction if there is no remaining traffic in the allowable operation traffic of the target performance pool.

3. The method according to claim 1 or 2, wherein each performance group comprises at least one performance subgroup, and allowable operation traffic is calculated for each performance subgroup in advance; and
the selecting, from the at least one performance group, a target performance group to which the target service object belongs, and determining whether there is still remaining traffic in allowable operation traffic of the target performance group comprises:
selecting, from performance subgroups comprised in the at least one performance group, a target performance subgroup to which the target service object belongs, and determining whether there is still remaining traffic in allowable operation traffic of the target performance subgroup; and if there is still remaining traffic in the allowable operation traffic of the target performance subgroup, using a performance group to which the target performance subgroup belongs as the target performance group to which the target service object belongs, and determining whether there is still remaining traffic in the allowable operation traffic of the target performance group.

4. The method according to any one of claims 1 to 3, wherein the method further comprises:
obtaining the service objects supported by the storage array, and creating the at least one performance group, wherein each performance group comprises at least one service object; and
calculating the allowable operation traffic of each performance group, wherein the allowable operation traffic comprises at least one of a quantity of write operations, write operation bandwidth, a quantity of read operations, or read operation bandwidth.

5. The method according to claim 4, wherein the method further comprises:
setting a priority level of the at least one performance group; and
adjusting the allowable operation traffic of each performance group according to a priority level of the performance group, wherein the adjusted allowable operation traffic of each performance group corresponds to the priority level of the performance group.

6. The method according to claim 2 or 3, wherein the method further comprises:
creating the at least one performance pool according to the at least one disk domain comprised in the storage array, wherein each performance pool comprises at least one disk domain;
calculating the allowable operation traffic of each performance pool, wherein the allowable operation traffic comprises at least one of a quantity of write operations, write operation bandwidth, a quantity of read operations, or read operation bandwidth; and
associating a parent-child relationship between the at least one performance group and the at least one performance pool, wherein each performance pool comprises at least one performance group.

7. The method according to claim 3, wherein after the responding to the operation instruction, the method further comprises:
querying current allowable operation traffic of the target performance group, and adjusting the current allowable operation traffic of the target performance group according to current traffic generated by the operation instruction;
querying current allowable operation traffic of the target performance pool, and adjusting the current allowable operation traffic of the target performance pool according to the current traffic generated by the operation instruction; and
querying current allowable operation traffic of the target performance subgroup, and adjusting the current allowable operation traffic of the target performance subgroup according to the current traffic generated by the operation instruction.

8. A storage array operation apparatus, comprising a receiving unit, a determining unit, a responding unit, and a first rejection unit, wherein
the receiving unit is configured to receive an operation instruction that is delivered by a target service object and that is directed at a cache of a storage array, wherein service objects supported by the storage array are divided into at least one performance group, and allowable operation traffic is calculated for each performance group in advance;
the determining unit is configured to select, from the at least one performance group, a target performance group to which the target service object belongs, and determine whether there is still remaining traffic in allowable operation traffic of the target performance group;
the responding unit is configured to respond to the operation instruction if there is still remaining traffic in the allowable operation traffic of the target performance group; and
the first rejection unit is configured to reject the operation instruction if there is no remaining traffic in the allowable operation traffic of the target performance group.

9. The apparatus according to claim 8, wherein the storage array comprises at least one disk domain, the at least one disk domain is divided into at least one performance pool, allowable operation traffic is calculated for each performance pool in advance, and each performance pool comprises at least one performance group;
the responding unit is configured to: if there is still remaining traffic in the allowable operation traffic of the target performance group, select, from the at least one performance pool, a target performance pool to which the target performance group belongs, and determine whether there is still remaining traffic in allowable operation traffic of the target performance pool; and if yes, respond to the operation instruction; and
the apparatus further comprises:
a second rejection unit, configured to reject the operation instruction if there is no remaining traffic in the allowable operation traffic of the target performance pool.

10. The apparatus according to claim 8 or 9, wherein each performance group comprises at least one performance subgroup, and allowable operation traffic is calculated for each performance subgroup in advance; and
the determining unit is configured to: select, from performance subgroups comprised in the at least one performance group, a target performance subgroup to which the target service object belongs, and determine whether there is still remaining traffic in allowable operation traffic of the target performance subgroup; and if yes, use a performance group to which the target performance subgroup belongs as the target performance group to which the target service object belongs, and determine whether there is still remaining traffic in the allowable operation traffic of the target performance group.

11. The apparatus according to any one of claims 8 to 10, wherein the apparatus further comprises:
a first creating unit, configured to obtain the service objects supported by the storage array, and create the at least one performance group, wherein each performance group comprises at least one service object; and
a first calculation unit, configured to calculate the allowable operation traffic of each performance group, wherein the allowable operation traffic comprises at least one of a quantity of write operations, write operation bandwidth, a quantity of read operations, or read operation bandwidth.

12. The apparatus according to claim 11, wherein the apparatus further comprises:
a setting unit, configured to set a priority level of the at least one performance group; and
a first adjustment unit, configured to adjust the allowable operation traffic of each performance group according to a priority level of the performance group, wherein the adjusted allowable operation traffic of each performance group corresponds to the priority level of the performance group.

13. The apparatus according to claim 9 or 10, wherein the apparatus further comprises:
a second creating unit, configured to create the at least one performance pool according to the at least one disk domain comprised in the storage array, wherein each performance pool comprises at least one disk domain;
a second calculation unit, configured to calculate the allowable operation traffic of each performance pool, wherein the allowable operation traffic comprises at least one of a quantity of write operations, write operation bandwidth, a quantity of read operations, or read operation bandwidth; and
an association unit, configured to associate a parent-child relationship between the at least one performance group and the at least one performance pool, wherein each performance pool comprises at least one performance group.

14. The apparatus according to claim 10, wherein the apparatus further comprises:
a second adjustment unit, configured to query current allowable operation traffic of the target performance group, and adjust the current allowable operation traffic of the target performance group according to current traffic generated by the operation instruction;
a third adjustment unit, configured to query current allowable operation traffic of the target performance pool, and adjust the current allowable operation traffic of the target performance pool according to the current traffic generated by the operation instruction; and
a fourth adjustment unit, configured to query current allowable operation traffic of the target performance subgroup, and adjust the current allowable operation traffic of the target performance subgroup according to the current traffic generated by the operation instruction.
